# EUROPEAN PATENT APPLICATION

(11) **EP 1 717 745 A1**
(43) Date of publication of application: **02.11.2006**
(21) Application number: 06397005.7
(22) Date of filing: 02.05.2006
(51) Int. Cl.: G06Q 10/00

(54) **Method and arrangement for generating a receipt**

(30) Priority: 29.04.2005 FI 20050456
(71) Applicant: TAMTRON OY, 33561 Tampere (FI)
(72) Inventor: Asikainen, Pentti, 35800, Mänttä (FI)
(74) Representative: Kupiainen, Juhani Kalervo

(57) **Abstract**

The invention relates to a method and an arrangement (300) for generating a receipt, especially to generating a receipt of at least one measurement data of an object. According to the invention the receipt, which comprises at leas one measured data, is an electronic receipt and it is arranged to be delivered electronically for inspection, such as approval or disapproval, by means of measuring means (302, 304, 306), a server (308) and/or a terminal (310, 312, 314).

## Description

The invention relates to a method and an arrangement for generating a receipt. The invention relates especially to generating a receipt of at least one measurement data of an object.

Various methods are prior known for generating a receipt from results of measurement of an object, such as printing a receipt from weighing data of timber, soil or rock material. To receipts relating to many industrial measurements (or deliveries) is also related checking the correctness of the receipt (or freight warrant) and either approval or a disapproval, based on which e.g. the further handling or settling a compensation is determined.

However, prior art solutions are related with certain problems, such as delay of the further handling of the object as a consequence of that a printed receipt is delivered to the approving party, after which the receipt is delivered back to the body deciding on the continuation and/or debiting. It is also possible that a new task cannot be assigned to the handling means of the object, such as means of transport, loader, or other transport equipment, until the previous task has been taken care of and approved i.e. a receipt has been approved after the handling means has delivered the receipt. This causes delay, waiting and unnecessary idling also for the handling equipment. Further, in prior art solutions a lot of paper material is generated which is difficult to administer and which gets easily lost or destroyed.

It is thus the object of the invention to create a solution for generating a receipt in such a way that the above-mentioned disadvantages which relate to the prior art can be reduced. Further, the invention aims at solving how the receipt can be delivered preferably in real time to the parties who check the receipt and possibly either approve or disapprove the receipt, and how it can be assured that the receipt is available for checking only to the entitled parties, and how it can be assured that the receipt can be checked, approved or disapproved only by the entitled parties. As one embodiment the invention aims at making it possible for all parties to monitor receipts independently on time and place, and possibly also to approve or disapprove a receipt.

The objects of the invention are achieved with an arrangement according to claim 1 and with a method according to claim 21.

An arrangement according to the invention is characterized by what is disclosed in the characterising part of claim 1. A method according to the invention is characterised by what is disclosed in the characterising part of claim 21.

E.g. following terms are used in this patent application:
- "Alibi memory" is e.g. an external or an internal memory unit which collects measurement events into its storage. In addition to or instead of measurement results, according to the invention it is possible to store into the alibi memory a receipt generated from measurement results and/or data related to approval or disapproval of a receipt and also data relating to an inspecting party.
- "A receipt" is electronic data generated from a measurement result, which data is, according to the invention, inspected and possibly cleared that is approved or disapproved. According to one embodiment of the invention a receipt is also a freight warrant, which is approved or disapproved by at least one party which relates to the freight warrant.
- "Passage control means" is some means known from the prior art meant for passage control of objects (or also transport means), such as means applicable for e.g. detecting and identifying RFID identifiers that are attached to objects and after detecting the RFID identifier at issue gives information as an output that the concerned object equipped with RFID identifier was within the reading distance range of the passage control means at the concerned point of time. According to the invention, it is possible to use network or satellite positioning (such as GPS, Galileo) for detecting location as a part of passage control means.
- "Handling means" is means meant for handling an object, such as a transporter, a loader, a packager, a waste processing system, or a transport means such as a truck or a forklift.
- "A measurement means" is means for measuring some property of an object, such as weighing means which measures the weight of the object. According to the invention, also a passage control means is a measurement means "measuring" the movement or location of an object. According to one embodiment of the invention also the object handling means is a measurement means measuring the task it performs to the object, for example whether transport of the object has been performed or not.
- "An object" is goods which can be measured, transported, loaded or packaged, such as timber, soil, rock or building material, trunk, container or waist.
- "Measurement data" is preferably data which the measurement means has acquired from the object by measurement, such as weight of an object. According to the invention, measurement data may also be object location data "measured" by passage control means or data measured by the handling means, such as transport means, about that an object has been transported from one location to another. The measurement data can also be data "measured" by loading means about that the object has been loaded, data "measured" by packaging means about that the object has been packed. The data to be cleared may also concern freight warrants, driving instructions and cash debit notes.

In the invention at least one piece of data is measured with a measurement arrangement from an object to be measured and a receipt is generated from the measurement result, wherein the receipt comprises at least one measured data of the object. According to the invention the receipt is an electronic receipt and it is arranged to be inspected electrically and preferably to be approved or disapproved electrically.

According to one embodiment of the invention the invention comprises measurement means, such as scales, for measuring the weight of an object, passage control means for monitoring the travel of an object, or object handling means for handling an object, such as transport means for transporting an object.

According to a second embodiment of the invention the invention further comprises a server and at least one terminal, such as a mobile station, vehicle computer of data processing means, which is arranged into data transfer connection with the server.

According to a third embodiment a receipt is arranged for approval or disapproval for scales, passage control means and/or a server, wherein the receipt is preferably approved or disapproved by means of the scales, the passage control means and/or the server. According to a fourth embodiment of the invention a receipt is approved or disapproved by means of a terminal which is in data transfer connection with scales, passage control means and/or a server. According to a fifth embodiment a receipt is delivered for approval or disapproval to a terminal, such as data processing equipment, vehicle computer or a mobile communicator, wherein the receipt is approved or disapproved by means of some terminal. The receipt (approval / disapproval) is preferably stored into some part of the system according to the invention for later examination or other measures.

According to a sixth embodiment of the invention a notification is delivered to a terminal about that a receipt has been arranged for approval or disapproval.

According to a seventh embodiment of the invention the invention also comprises a drive arranger, site manager, receiver or sender of goods, or other corresponding party (for a better readability term "drive arranger" is used for the mentioned parties in the following and especially in claims), who is arranged to monitor receipts and/or freight warrants, and especially receipts which have been approved and object measurement means relating to them. An approved receipt preferably indicates that said measurement means and/or handling means has correctly performed the task determined for it and that it is free. According to the invention the drive arranger delivers a new executable task tor free object measurement means or object handling means, which the approved receipt is related to, on the basis of the approved receipt information.

In a solution according to the invention it is possible to use also alibi memory for storing an electronic receipt and/or a printer for printing an electronic receipt if this is considered necessary due to directions of the authorities, for example.

In the present invention the actual approval or disapproval can be performed by some means, such as a press button, or by inputting a password or similar, wherein it can be assured that only determined parties have access to the receipt information. Further, the clearing can be performed with at a terminal, such as a mobile station, with e.g. SMS / MMS message, or alternatively the terminal may have separate means, such as program, for the clearing. The clearing can also be performed with a terminal, measurement equipment or handling means, as described in this document.

In one embodiment of the invention data relating to an inspecting party is stored. The data may comprise e.g. name, address, e-mail, and mobile station connection information. In one embodiment the data relating to the inspecting party and to be stored includes data about the transfer manner of the receipt. This way it is possible to transfer the receipt for the inspection with several alternative ways, depending on the inspecting party. Similarly it is possible to store, relating to the inspecting party, data about whether approval of the inspecting party is required for performing further procedures, such as transport, access or debiting. This way diversity of the end customers can be taken into account; the customers who use services often and those who have developed data systems may require that a receipt is approved with their approval notification and may prefer to inspect a receipt stored in a server, via the Internet. The end customers using the services more rarely and equipped with less information technology equipment may instead wish a delivery of the receipt to a mobile station or e-mail and do not require that the receipt should be approved with an approval notification.

The invention provides considerable advantages, such as totally electronic storage of measurement results and receipts and real-time functionality, as well as improving work efficiency of measurement equipment because a new task to be performed can be given for performing for a measurement means and/or handling means when the previous task has been performed in an approved way. An electronic, approved or disapproved receipt generated according to the invention can be attached to other documents as an indication of performance and approval of the task. Further, vouchers, receipts and documents on paper can be given up while electronic receipts replace them. Still further the invention allows billing, payment of salaries, and monitoring working hours with electronic receipts. After the approval of a receipt the party delivering an object has, for example, a right to bill the receiver of the object and/or a party relating to transporting or handling the object for expenses caused by transport or handling. The billing can be performed electronically, whereby the electronic receipt can be easily attached to the electronic debit note as an attachment. It is also possible to copy data from an electronic receipt into an electronic debit note.

According to the invention the processing of electronic receipts can be performed separately relating to each measurement event, whereby each party performing a clearance sees only measurements associated to that party.

Some preferable embodiments of the invention are further disclosed in dependent claims.

In the next part preferable embodiments of the invention are disclosed in more detail referring to enclose figures, in which
- Figure 1: describes as a flow diagram one exemplary method for generating a receipt according to one preferable embodiment of the present invention,
- Figure 2: describes as a flow diagram one exemplary method for arranging a drive arrangement according to one preferable embodiment of the present invention.
- Figure 3: describes an exemplary arrangement for generating a receipt according to one preferable embodiment of the present invention, and
- Figure 4: describes an exemplary drive arranger according to one preferable embodiment of the present invention.

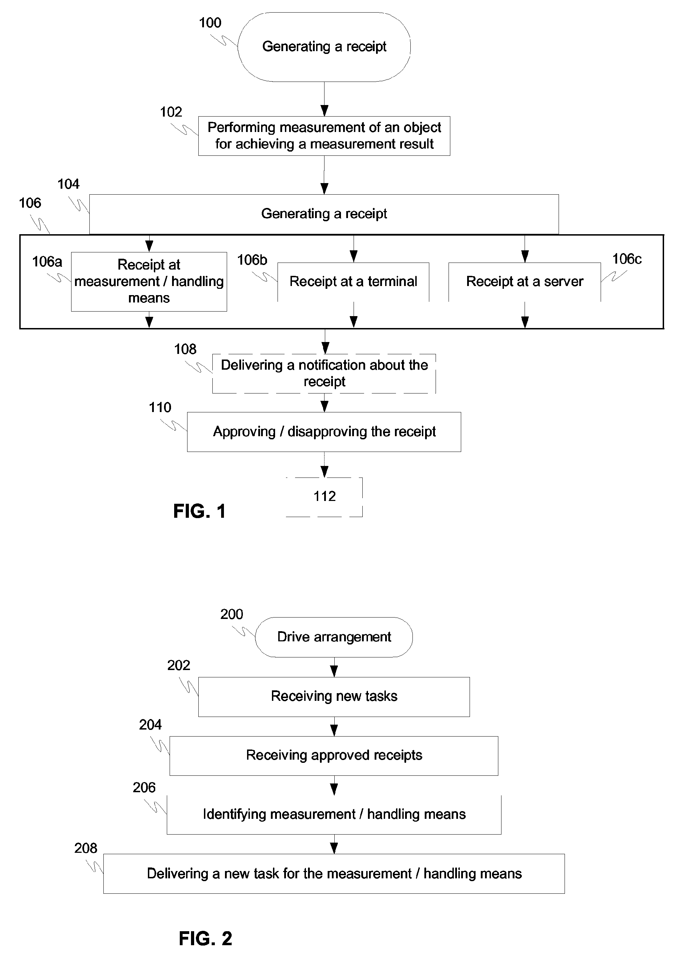

Figure 1 describes as a flow diagram an exemplary method 100 for generating a receipt according to one preferable embodiment of the present invention, wherein in phase 102 a measurement of an object is performed (preferably by means of some measurement means described in this document) for achieving a measurement result. The object may be e.g. timber or some other loadable or movable goods such as a container or a crunch, soil, rock or building material, or waste, especially waste requiring special treatment, whereby the producer of the waste carries the responsibility for the treatment of the waste.

The measurement may concern e.g. weight of the object or passage control, whereby the measurement means is e.g. scales or passage control means, such as an access control gate through which the object is transported. When transporting the object by the passage control means the passage control means preferably detects an identifier attached to the object. The measurement means may also be some other handling means of the object, such as a loader, transport means, a truck, a trailer truck, straddle carrier, container handling means, transporter or packager, or waste processing means. Due to conformity and clarity term "measure" is used in this document for detection of an identifier attached to an object, performed by passage control means, as well as for a task performed by an object handling means (for example loader or transporter), i.e. passage control means "measures" the travelling of the object by the passage control means and a transporter "measures" the transport of the object that is whether the object has been transported or not, and the waste processing system "measures" the reception and processing of the waste and then delivers said receipt for the waste producer being responsible for the treatment of the waste. Thus the passage control means, such as also the waste processing system, is one measurement means in this document.

According to one embodiment of the invention the measurement means can also be measurement means attached to the object itself for e.g. monitoring the travelling of the object, whereby the measurement means measure the location of the object by means of for example satellite location, base station location of a cellular radio network or cellular location or some other prior art system arranged for detecting the location of the object. Thus, when the object arrives at a certain location the measurement means gives as an output a measurement result (object is located in the concerned place), of which a receipt can be generated in some manner described in this document. The receipt can be transmitted, relating to the location, for approval or disapproval to e.g. a certain party (a terminal, a server or other means of clearance). According to one embodiment location means are substantially included in measurement means mentioned in this paragraph. It must be noted that a receipt can be generated also in some other phase than what has been described here.

In phase 104 a receipt is generated following the measurement result achieved from the measurement. It must be noted that although, according to one embodiment of the invention, the generator of the receipt is the measurement means itself, the generator can, according to another embodiment of the invention, be some other means, such as a server, a drive computer or some other terminal for example, for which the measurement result can be delivered in one embodiment of the invention from the measurement means as so-called raw data and whereby said another party then generates the actual receipt.

In phase 106 the receipt is then arranged for approval or disapproval either by keeping the receipt at the generator 106a, 106b, 106c, from which a second party can transfer/load the electronic receipt to its own terminal for viewing, or by sending the receipt to another party. In one embodiment the procedure of transferring the electronic receipt to an inspecting party, such as an end-customer, is dependent on the inspecting party. In this case, Related to other data concerning an inspecting party, data is stored about how the electronic receipt is transferred to the concerned inspecting party. Then the electronic receipt is transferred to each inspecting party by using a transfer manner which is determined within the information related to the concerned inspecting party in the system.

After this a party, such as an inspecting party, which has a right to approve or disapprove a receipt, can approve or disapprove the receipt in phase 110, where after information of this matter can be delivered to e.g. a party monitoring measurements in phase 112, which can be e.g. a billing arranger and/or a drive arranger, or an element in a server. Based on this, a party monitoring the measurements can determine further procedures for handling the object (approved receipt) or alternatively determine a new measurement (disapproved receipt). One further procedure van be billing parties and/or discharging from liability, for example.

In one embodiment it is dependent on the inspecting party, whether approval notification is required from the inspecting party before further procedures, such as billing, transport or a determined access. In this case, in relation to other information on the inspecting party, information is stored on whether an approval notification is required or whether it is sufficient for performing further procedures only e.g. that a predetermined time period has lapsed after generation or transfer of the receipt and that a disapproval notification has not been received from the inspecting party. Then in relation to each inspecting party the approval requirement is used which is determined in the system within the information relating to the concerned inspecting party.

It is also possible that said transfer procedure and approval procedure are dependent on each other, whereby they can be stored relating to the inspecting party as one piece of data, which indicates both the receipt transfer procedure and the approval procedure, which are conformed to for the concerned inspecting party. It can be conceived, for example, that as one alternative there is transmission of a receipt to customer's mobile station or e-mail address, whereby an approval notification is not required for performing further procedures. As a second alternative could be transmission of the electronic receipt to a server, whereby the information on the existence of the electronic receipt is transferred to the customer to a mobile station or e-mail address. Then the requirement for further procedures could be that the customer has transferred (acquired/loaded) the electronic receipt from the server for viewing and sent its approval notification, which has been received into the system.

According to one embodiment the clearance action or even the receipt itself can be protected also with a password or a user identifier - password pair, whereby only parties knowing said identifiers can perform an approval or disapproval of the receipt, or even view the receipt. Still further, according to one embodiment of the invention the information that the receipt is available for approval/disapproval can be delivered in phase 108. According to one embodiment the information can be delivered to the knowledge of at least one such party which has a right to approve/disapprove the receipt. Said information, as well as the clearance itself, can be delivered with e.g. e-mail, SMS or MMS message, Via an Internet page, through digital TV, chat message or similar. However, it must be noted that phase 108 is optional and that the phases shown in Figure 1 can be implemented with a suitable arrangement also in a different sequence.

If said further procedure is billing, in the present solution the electronic receipt can be easily attached as an attachment of the electronic debit note to be formed and sent without manual copying or scanning of the receipt. Further, information of the electronic receipt can be transferred / copied into an electronic debit note without a manual input of the information into the debit note.

Figure 2 illustrates as a flow diagram one exemplary method 200 for arranging a drive arrangement according to one preferable embodiment of the present invention, where in the method new tasks to be performed are received in phase 202. In addition e.g. receipts that are generated and approved according to the method described in Figure 1 are received in the method.

In phase 206 a measurement device that relates to the received, approved receipt is identified, whereby in phase 208 a new task can be delivered for the concerned measuring device or handling device to be performed, such as a new load to be weighed for scales or new goods to be transported or loaded for a loader or transport means. The transport means can be e.g. a car which has been released from a task.

The receiving of tasks and approved receipts, as well as the implementing of phases 206 and 208 can be dealt with e.g. suitably arranged means residing in a server or a drive arranger.

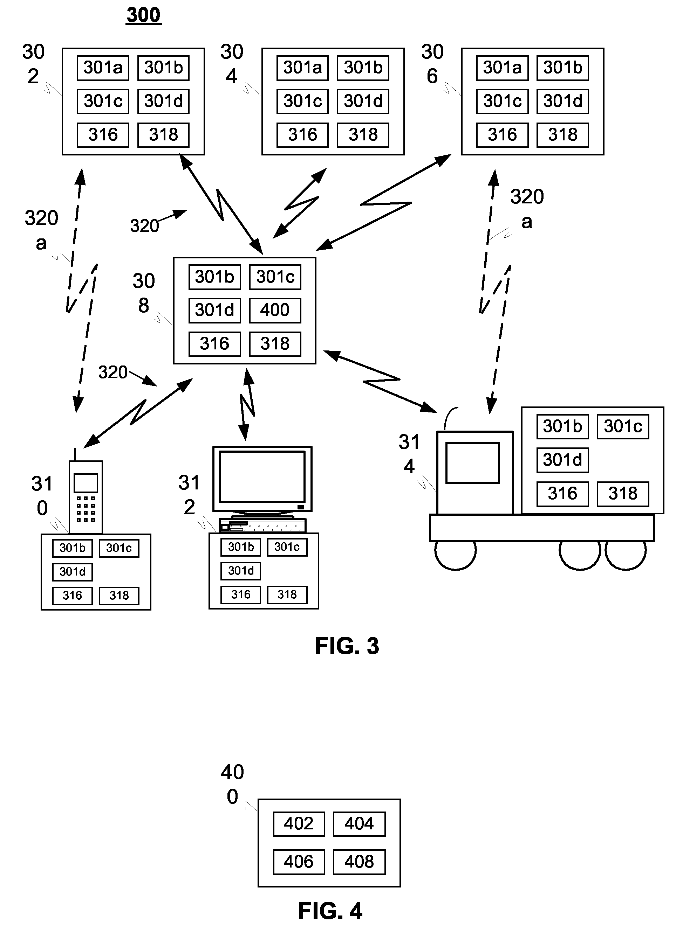

Figure 3 illustrates an exemplary arrangement 300 for generating a receipt according to one preferable embodiment of the present invention, wherein the system comprises at least one of the following measurement means: scales 302, passage control means 304 and handling means 306. Further, according to one embodiment of the invention, the system 300 also a server 308, which is arranged into data transfer connection with measurement means 302, 304, 306. Still further, according to one embodiment of the invention the system 300 comprises also some terminal, such as a mobile station 310, data processing device, such as a computer 312, or a drive computer 314, which have been arranged into data transfer connection with either the server 308 or the measurement means 302, 304, 306.

According to the invention the measurement means 302, 304, 306 have means 301a for performing a measurement, such as measuring weight or controlling passage of an object, means 301 b for generating an electronic receipt from a measurement result achieved as a consequence of the measurement, means 301 c for approving or disapproving the receipt, and data transfer means 301d for delivering the measurement result or the receipt or other information to some other party, such as the server 308 or the terminal 310, 312, 314. The data transfer means 301d can also be arranged to deliver a notification about the receipt and/or to receive a clearance from a server or a terminal.

However, it must be noted that according to one embodiment of the invention the means 301 b are optional, whereby the measurement data is delivered to some other party and the receipt is generated by some other party. Also means 301 c are optional according to one embodiment of the invention, whereby the receipt is approved by means of some other means, a server or a terminal, for example.

According to one embodiment of the invention the server further comprises data transfer means 301 d for receiving or delivering a receipt or approval /disapproval or other information between itself and some other party, such as between itself 308 and a measurement device 302, 304, 306 or a terminal 310, 312, 314. The server can also comprise means 301 b for generating a receipt as a consequence of a measurement result provided by measurement means, and means 301 c for approving or disapproving the receipt.

According to one embodiment of the invention terminals 302, 304, 306 of the system 300 have data transfer means 301 d for receiving or delivering a receipt or approval / disapproval or other information between itself and some other party, such as between itself and a server 308 or between itself and a measurement device 302, 304, 306. The terminal 302, 304, 306 can also comprise means 301 b for generating a receipt as a consequence of a measurement result provided by measurement means, and means 301 c for approving or disapproving the receipt.

According to one embodiment of the invention the server 308 also comprises a drive arranger 400, which is shown in more detail in Figure 4.

Further, according to one embodiment of the invention the measurement device 302, 304, 306, the server 308 and/or the terminal 310, 312, 314 comprises an alibi memory 316 for storing an electronic receipt and data relating to it, and for printing data relating to it as text or bar code, for example.

It must be noted that according to the idea of the invention all combinations are possible, wherein a receipt can be approved / disapproved by means of measurement means that have performed the measurement or other measurement means 302, 304, 306, a server 308 and/or a terminal 310, 312, 314. Also an embodiment is possible wherein measurement means 302, 304, 306 delivers a receipt or measurement data for generating a receipt directly to some terminal 310, 312, 314 without a server 308 as an intermediary (marked with a dashed line arrow 320a). In addition, the receipt or the measurement data can also be delivered transparently via a server to some terminal so that the terminal does not need to send a request to the server for downloading the receipt / data for viewing on a terminal.

In one embodiment the transfer procedure of the electronic receipt to the inspecting party, such as an end-customer, is dependent on the inspecting party. In this case data about how the electronic receipt is delivered to the concerned inspecting party is stored with relation to other data concerning the inspecting party to e.g. an alibi memory 316 or to other memory. The electronic receipt is transferred to the inspecting party using the transfer procedure which is determined within data about the concerned inspecting party within the system.

In one embodiment it is dependent on the inspecting party, whether approval notification is required from the inspecting party before a further procedure, such as billing, transport or a determined passage. In this case, in relation to other information on the inspecting party, information is stored to e.g. alibi memory 316 or to other memory on whether an approval notification is required or whether it is sufficient for performing further procedures only e.g. that a predetermined time period has lapsed after generation or transfer of the receipt and that a disapproval notification has not been received from the inspecting party. Then in relation to each inspecting party the approval requirement is used which is determined in the system within the information relating to the concerned inspecting party.

It is also possible that said transfer procedure and approval procedure are dependent on each other, whereby they can be stored relating to the inspecting party as one piece of data, which indicates both the receipt transfer procedure and the approval procedure, which are conformed to for the concerned inspecting party. It can be conceived, for example, that as one alternative there is transmission of a receipt to customer's mobile station or e-mail address, whereby an approval notification is not required for performing further procedures. Said transmission of a receipt could be performed e.g. directly in a mobile communication system or Internet e-mail system, or transparently through a server 308. As a second alternative could be transmission of the electronic receipt to a server, whereby the information on the existence of the electronic receipt is transferred to the customer to a mobile station or e-mail address. Then the requirement for further procedures could be that the customer has transferred (acquired/loaded) the electronic receipt from the server for viewing and sent its approval notification, which has been received into the system. The memory means for storing the data relating to an inspecting party can reside in a measurement device 302, 304, 306, in a server 308, or in a terminal 310, 312, 314, and the data can be decentralized or copied into several memories.

In the system 300 the parties handle the data communication by means of data transfer means 301 d. The data transfer between the data transfer means 301 d of the parties is most preferably performed by means of some wireless data transfer connection 320, 320a, such as with radio modem or connections using GSM/GPRS, EDGE, UMTS, G3, G4, CDMA, Wlan, Bluetooth, Tetra, Infra and/or ultra technologies. According to one embodiment of the invention the data transfer between the parties can be implemented also by means of memory sticks, memory cards, optical storages or other mobile data transfer media.

When said further procedure is billing, in the present solution the electronic receipt can be can be generated in a server, in a measurement device or in a terminal, and it can be transferred by using data transfer channels 320 or 320a. The electronic receipt can be easily attached as an attachment of the electronic debit note to be formed and sent without manual copying or scanning of the receipt. Further, information of the electronic receipt can be transferred / copied into an electronic debit note without a manual input of the information into the debit note.

Figure 4 illustrates one exemplary drive arranger 400 according to one preferable embodiment of the invention. The drive arranger 400 has means 402 for receiving, storing and arranging new tasks according to the requirements of the task, for example. Further, the drive arranger comprises means 404 for at least receiving approved receipts. Alternatively the means 404 may receive also disapproved receipts. Still further the drive arranger has means 406 for identifying a measurement device relating to the received, approved receipt, by means of receipt information.

The drive arranger 400 has also means 408 for selecting a new task to be performed from a group of new tasks to be performed and for delivering the selected task to a measurement device or to handling means. With means 408 it is possible to determine, for example, based on the receipt data, the measurement device / handling means and thus the function of the measurement device / handling means, what kind of measurements / processes the concerned measurement device / handling means performs and then to select a suitable new task from a group of received and stored tasks to be performed for the concerned free measurement device / handling means (measurement device / handling means which the receipt is related to), such as to deliver a new load to be weighed to scales or new goods to be transported or loaded for a transporter, loader or truck, for example.

Above only some embodiments of the solution according to the invention has been described. The inventive principle can naturally be modified within the scope of protection determined by the claims, in respect of details of the implementation and areas of use, for example. It must be noted that, for example, the scales and passage control system used herein are just examples of measurement means in which the solution according to the invention can be used. Additionally, the idea of the invention can be used in relation to handling means paralleled to measurement means. Further, it must be noted that according to the invention the receipt can be generated and also approved / disapproved with any measurement means / handling means, a server and/or a terminal described herein. Additionally it must be noted that the data can also come to the parties as collected and not just one piece of measurement data or clearance (approval / disapproval) at a time.

Further, according to one embodiment of the invention a measurement result and/or a receipt can be input even manually for some party described in this document in such a way that as a consequence an electronic receipt is achieved which can be cleared (approved / disapproved) according to the present invention. Additionally it must be noted that especially an approved receipt enables billing between the parties and e.g. allowing discharge from liability. Using the idea of the invention a discharge from liability can be allowed e.g. to a supplier of such waste who is responsible for further treatment of the waste it has supplied. The approved receipt can be generated by means of e.g. waste processing system after the waste has been delivered to the waste processing system and/ or processed, and said approved receipt can be delivered to the waste supplier, whereby the responsibility of the waste supplier has been taken care of, and the waste producer can use the received receipt as an evidence for this.

In this mentioned case relating to waste processing the receipt can be generated either by the waste supplier, whereby this delivers the receipt for approval to the waste processing system when the waste has been received and/or processed there, or alternatively the waste processing system can generate the receipt and approve it after it has received and/or processed the waste and deliver the approved receipt to the waste supplier and possibly to other concerned parties.

## Claims

1. Measurement arrangement (300) for measuring at least one data of an object, wherein the measurement system is arranged (301 b) to generate a receipt as a result of the measurement, the receipt comprising at least one measured data of the object, **characterised in that** the receipt is an electronic receipt and that it has been arranged (301 c) to be delivered electronically for inspection.

2. Measurement arrangement according to claim 1, wherein the measurement arrangement comprises measurement means, such as scales (302) for measuring the weight of an object, passage control means (304) for controlling the travelling of an object by means of an identifier or a location means attached to the object, or object handling means (306) for handling an object, such as transport means for transporting or a waste processing means for receiving and processing an object.

3. Measurement arrangement according to any preceding claim, wherein the measurement arrangement further comprises a server (308), and at least one terminal, such as a mobile station (310), a drive computer (314) or a data processing device (312), which is arranged into data transfer connection (320, 320a) with the server or the measurement device.

4. Measurement arrangement according to claim 2 or 3, wherein the measurement arrangement is arranged to arrange the receipt to be approved or disapproved for a measurement device (302, 304, 306) and/or a server (308), and wherein the receipt is arranged to be approved or disapproved by means of a measurement device (302, 304, 306), and/or a server (308), and/or a terminal (310, 312, 314) which is in data transfer connection to measurement means (302, 304, 306) and/or a server (308); or wherein the measurement arrangement is arranged to deliver the receipt for approval or disapproval to a terminal, such as a data processing device (312), a drive computer (314) or a mobile station (310), and wherein the receipt is arranged to be approved or disapproved by means of some terminal.

5. Measurement arrangement according to claim 3 or 4, wherein the measurement arrangement is arranged to deliver a notification to a terminal about that a receipt has been arranged for approval or disapproval.

6. Measurement arrangement according to any of claims 2-5, wherein the measurement arrangement further comprises a drive arranger (400) which is arranged to monitor approved receipts and object measurement means (302, 304, 306) related to them, wherein the approved receipts indicate that the measurement means has performed a function determined for it and that it is free, and wherein the drive arranger is arranged to deliver (408) a new function to be performed for the object measurement device (302, 304, 306) to which the approved receipt is related, and/or to trigger billing.

7. Measurement arrangement according to any preceding claim, wherein the measurement arrangement further comprises an alibi memory (316) for storing the electronic receipt and/or a printer (318) for printing the electronic receipt.

8. Measurement arrangement according to any of claims 3-6, wherein the delivering of the data is arranged to be implemented by means of data transfer connection (320, 320a), or wherein the data transfer connection is e.g. one of the following: connection using radio modem, GSM/GPRS, EDGE, UTMS, G3, G4, CDMA, Wlan, Bluetooth, Tetra, Infra, and/or ultra technology.

9. Measurement arrangement according to any preceding claim, comprising means for storing data relating to an inspecting party.

10. Measurement arrangement according to claim 9, wherein data determining a transfer procedure of the receipt and relating to an inspecting party is arranged to be stored in said means for storing, whereby the arrangement comprises means for transferring the receipt to an inspecting party according to a transfer procedure information which is stored to the means for storing in logical relation to the concerned inspecting party.

11. Measurement arrangement according to claim 10, wherein said means for storing information on transfer procedure of a receipt are included in a device wherein said receipt is generated.

12. Measurement arrangement according to claim 9 or 10, wherein said means for storing information on transfer procedure of a receipt are included in a measurement device.

13. Measurement arrangement according to claim 9 or 10, wherein said means for storing information on transfer procedure of a receipt are included in a server.

14. Measurement arrangement according to claim 10, wherein at least one of said transfer procedures comprises transferring the receipt to a mobile station through a mobile communication system.

15. Measurement arrangement according to claim 10 or 14, wherein at least one of said transfer procedures comprises transferring the receipt from a server to a terminal through the Internet.

16. Measurement arrangement according to claim 9, wherein data determining approval requirement relating to an inspecting party is arranged to be stored to said means for storing, whereby the arrangement is arranged to perform a further procedure, such as a transport, billing or passage, either requiring receiving an approval message or without requirement for receiving an approval message, depending on said data determining approval requirement data which is stored in relation to the inspecting party.

17. Measurement arrangement according to claim 10 and 16, wherein, relating to an inspecting party, said data determining a transfer procedure of the receipt and said data determining the approval requirement, are mutually dependent and the data is arranged to be stored as one piece of data, which is used for determining both the transfer procedure and the approval requirement.

18. Measurement arrangement according to any preceding claim, which comprises means for forming an electronic debit note and means for its electronic delivery in such a way that said electronic receipt or data of the electronic receipt is attached with or included into the debit note which is formed and/or delivered electronically.

19. Measurement arrangement according to claim 18, which is arranged to require an approval of the receipt before forming and/or delivering the debit note.

20. Measurement arrangement according to claim 18, which comprises means for determining whether at least a predetermined time period has lapsed after generating the receipt or after delivering the receipt to an inspecting party, and whether a receipt disapproval notification has been received, whereby for forming the debit note a requirement has been arranged that at least the predetermined time period has lapsed and that a receipt disapproval notification has not been received.

21. Method (100) for measuring at least one data of an object, in which method a receipt is generated (104) as a result of the measurement, the receipt comprising at least one measured data of the object, **characterised in that** the receipt is an electronic receipt and that it has been arranged (301 c) to be delivered electronically for inspection.

22. Method according to claim 21, wherein the measured data of the object is weight of the object, passage control data of the object, or data relating to handling, transporting and/or receiving of the object.

23. Method according to claim 21 or 22, in which method at least one terminal, such as a mobile station (310), a drive computer (314) or a data processing device (312), is arranged into a data transfer connection (320, 320) with a server (308) or a measurement device (302, 304, 306).

24. Method according to claim 23, wherein the receipt is delivered for approval or disapproval to a measurement device (302, 304, 306) and/or a server (308), and wherein the receipt is approved or disapproved by means of a measurement device (302, 304, 306), and/or a server (308), and/or a terminal (310, 312, 314) which is in data transfer connection to measurement means (302, 304, 306) and/or a server (308); or wherein the receipt is delivered for approval or disapproval to a terminal, such as a data processing device (312), a drive computer (314) or a mobile station (310), and wherein the receipt is approved or disapproved by means of some terminal.

25. Method according to claim 23 or 24, in which a notification is delivered (108) to a terminal about that a receipt has been arranged for approval or disapproval.

26. Method according to any of claims 22-25, which method further has a drive arranger (400) which monitors approved receipts and object measurement means (302, 304, 306) related to them, wherein the approved receipts indicate that the measurement means has performed a function determined for it and that it is free, and wherein the drive arranger delivers a new function to be performed to the object measurement device (302, 304, 306) to which the approved receipt is related, and/or to triggers billing.

27. Method according to any of claims 22-25, further using alibi memory (316) is for storing the electronic receipt and/or a printer (318) for printing the electronic receipt.

28. Method according to any of claims 23-26, wherein the delivering of the data is arranged to be implemented by means of data transfer connection (320, 320a), or wherein the data transfer connection is e.g. one of the following: connection using radio modem, GSM/GPRS, EDGE, UTMS, G3, G4, CDMA, Wlan, Bluetooth, Tetra, Infra, and/or ultra technology.

29. Method according to any of claims 21-28, wherein data relating to an inspecting party is stored.

30. Method according to claim 29, wherein data determining a transfer procedure of the receipt and relating to an inspecting party is stored, whereby the method comprises transferring the receipt to an inspecting party according to transfer procedure information which is stored in logical relation to the concerned inspecting party.

31. Method according to claim 30, wherein information on transfer procedure of a receipt is stored in a device wherein said receipt is generated.

32. Method according to claim 29 or 30, wherein information on transfer procedure of a receipt is stored in a measurement device.

33. Method according to claim 29 or 30, wherein information on transfer procedure of a receipt is stored in a server.

34. Method according to claim 30, wherein at least one of said transfer procedures comprises transferring the receipt to a mobile station through a mobile communication system.

35. Method according to claim 30 or 34, wherein at least one of said transfer procedures comprises transferring the receipt from a server to a terminal through the Internet.

36. Method according to claim 29, wherein data determining approval requirement relating to an inspecting party is stored, whereby the method performs a further procedure, such as a transport, billing or passage, either requiring receiving an approval message or without requirement for receiving an approval message, depending on said data determining approval requirement data which is stored in relation to the inspecting party.

37. Method according to claim 30 and 36, wherein, relating to an inspecting party, said data determining a transfer procedure of the receipt, and said data determining the approval requirement, are mutually dependent and the data is stored as one piece of data, which is used for determining both the transfer procedure and the approval requirement.

38. Method according to any of claims 21-37, wherein an electronic debit note is formed and delivered electronically in such a way that said electronic receipt or data of the electronic receipt is attached with or included into the debit note which is electronically formed and/or delivered.

39. Method according to claim 38, wherein an approval of the receipt is required before forming and/or delivering the debit note.

40. Method according to claim 38, wherein it is determined whether at least a predetermined time period has lapsed after generating the receipt or after delivering the receipt to an inspecting party, and whether a receipt disapproval notification has been received, whereby for forming the debit note it is required at least that the predetermined time period has lapsed and that a receipt disapproval notification has not been received.
